Europäisches Patentamt

(19) European Patent Office

Office européen des brevets

(11) Publication number: **0 053 926**
**B1**

(12) **EUROPEAN PATENT SPECIFICATION**

(45) Date of publication of patent specification: **12.09.84**

(21) Application number: **81305738.7**

(22) Date of filing: **04.12.81**

(51) Int. Cl.³: **F 16 S 3/00**

(54) **Apparatus for use in the building of frameworks.**

(30) Priority: **04.12.80 GB 8038925**

(43) Date of publication of application:
**16.06.82 Bulletin 82/24**

(45) Publication of the grant of the patent:
**12.09.84 Bulletin 84/37**

(84) Designated Contracting States:
**BE CH DE FR GB IT LI NL SE**

(56) References cited:
**DE-B-2 059 829**
**GB-A-1 124 373**

(73) Proprietor: **D.H. INDUSTRIES LIMITED**
**Sullivan House Abbey Wharf Kingsbridge Road**
**Barking Essex 1G11 0RD (GB)**

(72) Inventor: **Sullivan, Howard Michael**
**26, Honeypot Lane**
**Brentwood Essex (GB)**

(74) Representative: **Cook, Anthony John et al**
**D. YOUNG & CO. 10, Staple Inn**
**London, WC1V 7RD (GB)**

## Description

This invention relates to apparatus for use in the building of frameworks. The invention is particularly intended for facilitating a cheap and simplified method of building a framework which is part of a machine guard housing, although the invention may have uses in other applications.

There is a present need for an easily available uncomplicated system of building guards around machinery which fulfils a number of conflicting requirements. Apart from any special requirements of the Safety Inspectors concerned, these requirements are, among others, that a framework should be easily modified or extended to include additional features or controls or components of the machine, should be strong enough and robust enough to withstand years of industrial use, and, moreover, should have a high quality appearance which enhances that of the machine which it encloses. It is also desirable that any such framework should not involve any drilling or tapping of fixing holes, and especially that the framework should be able to be assembled in a trouble free manner by relatively inexperienced personnel.

DE—B—2 059 829 discloses a support structure for use in the building of frameworks, including a length of elongate material of indefinite length having at least one surface which is planar and has therein a longitudinal recess whose cross section is substantially of D-shape having a recess entry width which is less than the maximum width of the recess.

According to the present invention there is provided at least one rod of indefinite length and having a cross-sectional shape which is complementary to that of the recess such that the rod can be inserted in the recess by rotating it about its own axis, the rod also having at least one threaded bore extending transversely therethrough, and at least one screw or bolt which has a thread complementary to that of the bore, the arrangement being such that the rod can be firmly fixed with the recess when held in one particular rotary position by a screw or bolt passing through a bore in the rod. The screw or bolt may be used to fix a frame member to the elongate material.

The apparatus particularly disclosed herein comprises a small number of basic standard components to which may be added special fittings and accessories to suit each individual application to a machine housing by the person building the machine guard.

An advantage of the invention is that frame members may be manufactured in extruded metal, for example aluminium, and may for example be made of two types, namely one frame member which is intended to support two planar panels arranged in the same plane, and a second frame member which is intended to support two panel members arranged in two planes at right angles to one another. Moreover, frame members according to the invention can easily accommodate interlock switches and controls.

In the use of the invention, simple corner brackets may be employed, which are fixed to the frame members by metal rod lengths of substantially D-shape which are herein sometimes referred to as "D-nuts". In addition, the D-nuts may be used to join two butting lengths of elongate (e.g. extruded) material. A special L-shaped form of fitting may be provided to enable two lengths of the elongate material to be securely fixed at right angles to one another. Such an L-shaped fitting may have a thinner portion in the region of its right-angle bend. This allows one limb of the L-shaped fitting to be inserted in a D-groove of a length of elongate material in such a way that it can be moved along to any position along the length of the groove, with the other limb projecting outwardly of the groove. The other limb may then be inserted into the end of a second length of elongate material, so making a T-joint between the two pieces of extruded material.

The invention will be better understood from the following non-limiting description of a particular example thereof, given with reference to the accompanying drawings in which:—

Figures 1—6 illustrate steps in the assembly method using apparatus according to one example of the present invention;

Figure 7 is a cross sectional view, showing two planar panels, of a length of extruded metal of indefinite length according to one example of the invention;

Figure 8 is a view similar to Figure 7 of a second example of extruded metal length particularly intended for accommodating two panels at right-angles to each other;

Figure 9 is a corner bracket shown fitted with two metal rod D-nuts and appropriate screws;

Figure 10 illustrates, in cross-section, a second form of elongate material alternative to the Figure 8 design;

Figure 11a, 11b and 11c are top, front and side views of one example of L-shaped fitting which may be employed; and

Figure 12 illustrates a T-joint formed using the fitting of Figure 11.

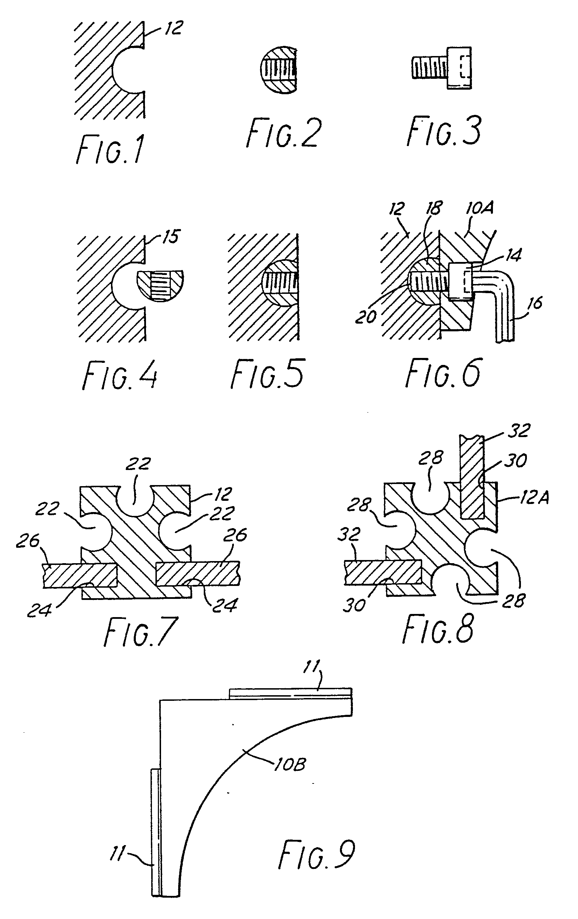

The essential elements of an apparatus according to the present invention are shown in Figures 1—3. Figure 1 shows a D-shaped recess or groove in a metal extrusion 12 of indefinite length, the recess extending longitudinally of the extrusion. The metal extrusion 12 of indefinite length is cut to a desired length in building a machine guard and is used as a frame member thereof. Figure 2 shows a cross-section of a metal rod of indefinite length which has a substantially D-shaped cross-section and, at one or more points along its length, a threaded bore extending transversely therethrough. Figure 3 shows a screw or bolt having a thread complementary to the thread in the bore of the D-shaped rod.

While an extrusion of metal has been referred to above, and is preferred, an elongate member of a substantially rigid plastics or other material could be employed in certain circumstances. If of plastics, it could be extruded to shape, or otherwise formed, for example by moulding.

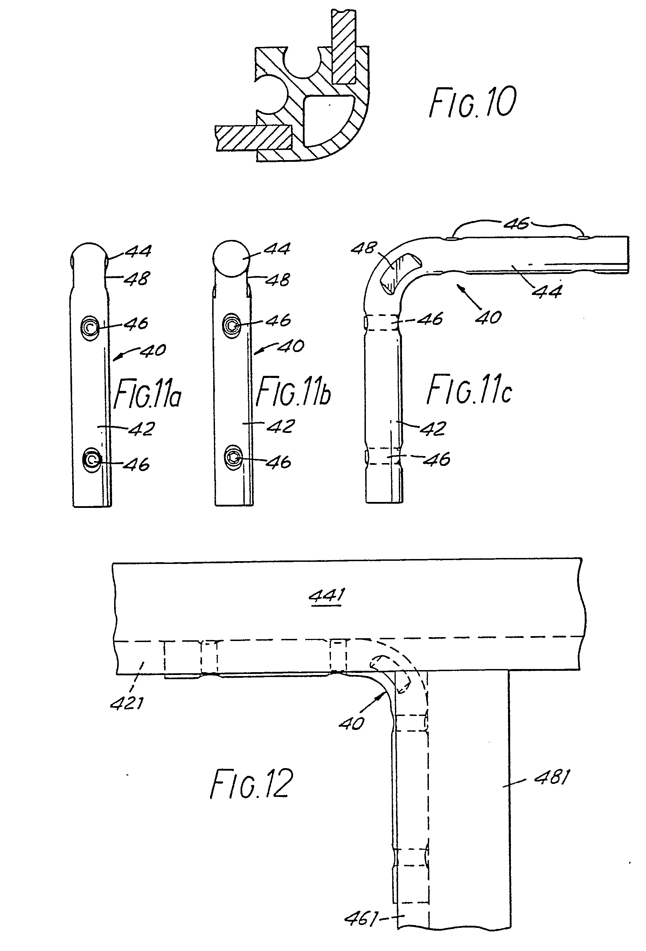

The sequence of assembly of a frame for protecting a machine or the like is illustrated in Figures 4—6. The metal rod is turned about its own axis and inserted into the longitudinal recess, and once placed therein, is rotated about its own axis to take up the position shown in Figure 5. Thereafter, a bracket 10A, Figure 6, is bolted to the frame member 12 (that is the length of extruded metal of indefinite length) using a bolt 14 which, as illustrated, may have a hexagonal recess in its head which is tightened by the use of an Allen key 16. An alternative form of the bracket is shown at 10B in Figure 9. It has two metal rods 11 of D-section secured thereto, each having grub screws, not shown, located in threaded holes transverse to the length of the rods 11.

Returning to Figure 6, it will be understood that the tightening of the bolt 14 in the threaded bore of the metal rod (D-nut) 18 results in the D-nut being tightly fixed or clamped within the longitudinal recess, since the maximum height (as seen in Figure 6) of the D-nut is greater than the vertical extent of the recess opening at the planar surface 15 of the frame member 12. Hence the bracket 10 is held to the frame member 12. When the bolt 14 is tightened, its free end 20 may or may not bear on the wall of the recess. If it is desired to firmly clamp the rod 18 in the recess, a grub screw provided in a suitable threaded bore in the rod 18 may be tightened so that its inner end bears on the wall of the recess. The tight clamping of the D-nut 18 in the recess holds the bracket 10 in a fixed relationship with the frame member 12.

Figure 7 illustrates an aluminium extrusion having longitudinal recesses 22 (D-grooves) on three sides and a pair of rectangular recesses 24 or grooves formed in each of two opposed sides of the extrusion 12. These recesses 24 of rectangular cross-section are of a width chosen to suit the panels which are to be supported, and in the extrusion illustrated in Figure 7, support two panels 26 arranged in the same plane.

Figure 8 illustrates an aluminium extrusion having four longitudinal recesses 28 (D grooves), one on each side of a basically square extrusion 12A, and also having a pair of longitudinal grooves 30 arranged to accommodate two panels 32, these panels being located with their planes at right angles to each other.

The provision in the case of Figure 7 of three grooves 22, and in the case of Figure 8 of four grooves 28 in the respective frame member 12 and 12A, allows a wide variety of different assembly configurations to be achieved, all without the use of rivets or drilling or tapping of fixing holes, or any other time-consuming operations.

Figure 10 of the drawings illustrates an alternative form of elongate frame member. This is basically similar to the Figure 7 frame member but differs in that a rounded corner is provided. It will be realised that other specific shapes for the elongate frame members are possible without departing from the present invention.

Figures 11a, 11b and 11c show an L-shaped fitting 40 or connection member which may be used to make L-joints or T-joints between two elongate frame members. The fitting 40 has a first limb 42 and a second limb 44 each having threaded holes therethrough for reception of grub screws 46. The fitting has a reduced-width portion 48. This permits one limb to be inserted lengthwise into a D-groove in an elongate frame member, and the fitting then to be slid therealong to a desired position. Figure 12 shows a T-joint using an L-shaped fitting 40 one of whose limbs is fitted into the D-groove 421 of an elongate frame member 441, and the other of whose limbs is fitted into the end part only of a D-groove 461 of a second elongate frame member 481.

In the foregoing description, reference has been made to the rod lengths (i.e. the "D-nuts") being of metal. Alternatively they may be of any other material having the necessary strength and hardness, for example a synthetic plastics material.

It will be realised from the foregoing disclosure that the apparatus for use in building frameworks particularly described above is of wide utility and simple to employ.

## Claims

1. Apparatus for use in the building of frameworks, particularly frames of machine guard systems, the apparatus including an elongate member (12) of indefinite length having at least one surface (15) which is planar and has therein a longitudinal recess (22, 28) whose cross-section is substantially of D-shape having a recess entry width which is less than the maximum width of the recess, characterized in that at least one elongate rod or tube (18) of indefinite length and having a cross-sectional shape which is complementary to that of the recess (22, 28) in such a manner that the rod or tube (18) can be inserted in the recess by rotating it about its own axis, and then moving it laterally, the rod or tube also having at least one threaded bore extending transversely therethrough, and at least one bolt or grub screw (14) which has a thread complementary to that of the bore, the arrangement being such that the rod or tube can be firmly fixed within the recess when held in one particular rotary position by tightening the bolt or the grub screw.

2. Apparatus according to claim 1 in which the elongate members (12) are manufactured in extruded metal, for example aluminium.

3. Apparatus according to claim 2 in which the elongate members (12, 12A) are of two types, namely one (12) which is intended to support two planar panels (26) arranged in the same plane, and a second type (12A) which is intended to support two panel members (32) arranged in two planes at right angles to one another.

4. Apparatus according to claim 1, 2 or 3 in which the elongate frame members (12) are arranged to support interlock switches and controls.

5. Apparatus according to claim 1, 2, 3 or 4 which includes bolts (14) rather than grub screws extending into the threaded bores in the rod or tube, and at least one of these bolts also passes a hole in a bracket (10A, 10B) or like member, in order to hold the bracket and the elongate frame member (12) securely together.

6. A kit of parts for making up a frame to support panels such as machine guard panels, the kit comprising an apparatus according to claim 1 with:

(a) a plurality of elongate frame members (12) each having a longitudinal groove therein;

(b) a plurality of rods (18), each rod having a cross-sectional shape which is complementary to that of each recess in the frame members (12) in such a manner that the rod can be inserted in any one of the recesses by rotating it about its own axis and moving it bodily laterally, the rod also having at least two threaded bores extending transversely therethrough;

(c) a plurality of brackets (10A, 10B each having holes therethrough suitable to receive bolts (14) whereby the brackets can be assembled in fixed relationships relative to the frame members in order to hold the frame members in a frame; and

(d) a plurality of bolts (14) each threaded so as to be received in a threaded bore in a rod (18).

7. A kit of parts according to claim 6 further including at least one L-shape fitting (40) complementary to the D-groove (22,28) in the elongate frame members (12).

**Patentansprüche**

1. Vorrichtung zur Verwendung beim Errichten von Gerüsten, besonders von Gestellen für Maschinenschutzsysteme, mit einem länglichen Teil (12) von unbestimmter Länge mit wenigstens einer Oberfläche (15), die eben ist und darin eine Längsvertiefung (22, 28) hat, deren Querschnitt im wesentlichen D-Form besitzt und eine Vertiefungseingangsbreite hat, die kleiner als die Maximalbreite der Vertiefung ist, gekennzeichnet durch wenigstens einen länglichen Stab oder ein längliches Rohr (18) von unbestimmter Länge und mit einer Querschnittsform, die derart komplementär zu jener der Vertiefung (22, 28) ist, daß der Stab oder das Rohr (18) in die Vertiefung durch Drehen um seine eigene Achse und anschließendes seitliches Bewegen eingesetzt werden kann, wobei der Stab oder das Rohr auch wenigstens eine sich durch ihn bzw. es quer hindurch erstreckende Gewindebohrung aufweist, und wenigstens einen Bolzen oder Gewindestift (14), der ein Gewinde komplementär zu jenem der Bohrung hat, wobei die Anordnung derart ist, daß der Stab oder das Rohr in der Vertiefung fest fixiert werden kann, wenn er bzw. es in einer bestimmten Drehstellung durch Anziehen des Bolzens oder Gewindestiftes gehalten wird.

2. Vorrichtung nach Anspruch 1, in der die länglichen Teile (12) aus extrudiertem Metall, wie beispielsweise Aluminium, gefertigt sind.

3. Vorrichtung nach Anspruch 2, in welcher die länglichen Teile (12, 12A) zwei Typen angehören, nämlich einer (12), die dazu bestimmt ist, zwei ebene Platten (26) zu unterstützen, die in der gleichen Ebene angeordnet sind, und einer zweiten Type (12A), die dazu bestimmt ist, zwei Platten (32) zu unterstützen, die in zwei Ebenen in rechten Winkeln zueinander angeordnet sind.

4. Vorrichtung nach Anspruch 1, 2 oder 3, in welcher die länglichen Gerüstteile (12) so angeordnet sind, daß sie Verriegelungsschalteinrichtungen und Kontrolleinrichtungen tragen.

5. Vorrichtung nach Anspruch 1, 2, 3 oder 4, welche Bolzen (14) statt Gewindestifte aufweist, welche sich in die Gewindebohrungen in dem Stab oder Rohr erstrecken, wobei wenigstens einer dieser Bolzen auch in ein Loch in einem Träger (10A, 10B) oder einem ähnlichen Teil geht, um den Träger und das längliche Gestellteil (12) fest aneinander zu halten.

6. Bausatz von Teilen zur Errichtung eines Gestelles zum Tragen von Platten, wie Maschinenschutzplatten, wobei der Bausatz eine Vorrichtung nach Anspruch 1 enthält, mit:

a) mehreren länglichen Gestellteilen (12), von denen jedes eine Längsnut darin besitzt,

b) mehreren Stäben (18), von denen jeder eine Querschnittsform besitzt, welche komplementär zu jener einer jeden Vertiefung in den Gestellteilen (12) derart ist, daß der Stab in irgendeine der Vertiefungen durch Drehen um seine eigene Achse und seitliche Bewegung eingesetzt werden kann, wobei der Stab auch wenigstens zwei Gewindebohrungen hat, die sich quer durch ihn erstrecken,

c) mehreren Stützen (10A, 10B), von denen jede zur Aufnahme von Bolzen (14) geeignete Löcher aufweist, wobei die Stützen gegenüber den Gestellteilen in fixierter Beziehung angeordnet werden können, um die Gestellteile in einem Gestell zu halten, und

d) mehreren Bolzen (14), von denen jeder so mit Gewinde versehen ist, daß er in einer Gewindebohrung in einem Stab (18) aufgenommen wird.

7. Bausatz von Teilen nach Anspruch 6, der zusätzlich wenigstens ein L-förmiges Anschlußstücke (40) enthält, das komplementär zu der D-Nut (22, 28) in den länglichen Gestellteilen (12) ist.

## Revendications

1. Dispositif à utiliser pour élever des structures à ossatures, en particulier bâtis de protecteurs de machines, le dispositif comportant un élément allongé (12) de longueur indéterminée comportant au moins une surface (15) qui est plane et présente en évidement longitudinal (22, 28) à section droite sensiblement en D présentant une largeur d'entrée d'évidement inférieure à la largeur maximale de l'évidement, caractérisé par au moins un barreau ou tube allongé (18) de longueur indéterminée ayant une forme de section droite complémentaire de celle de l'évidement (22, 28) de manière qu'on puisse insérer le barreau ou tube (18) dans l'évidement en le faisant tourner autour de son propre axe, puis le déplacer latéralement, le barreau ou tube présentant aussi au moins un perçage taraudé qui le traverse transversalement, et au moins un boulon ou vis sans tête (14) ayant un filetage complémentaire du perçage taraudé, l'agencement étant tel que l'on peut fixer fermement le barreau ou tube dans l'évidement lorsqu'on le maintient dans une position angulaire particulière en serrant le boulon ou la vis sans tête.

2. Dispositif selon le revendication 1 caractérisé en ce que les éléments allongés (12) sont fabriqués en métal extrudé, par exemple aluminium.

3. Dispositif selon la revendication 2 caractérisé en ce que les éléments allongés (12,12A) sont de deux types, à savoir un type (12) destiné à supporter deux panneaux plans (26) disposés dans le même plan, et un second type (12A) destiné à supporter deux éléments de panneaux (32) disposés dans deux plans perpendiculaires entre eux.

4. Dispositif selon la revendication 1, 2 ou 3 caractérisé en ce que les éléments de bâti allongés (12) sont agencés pour supporter des coupleurs et commandes de verrouillage.

5. Dispositif selon la revendication 1, 2, 3, ou 4 caractérisé en ce qu'il comporte plutôt que des vis sans tête des boulons (14) pénétrant dans les perçages taraudés du barreau ou tube, et au moins un de ces boulons traverse aussi un trou d'une équerre (10A,10B) ou élément analogue, en vue de maintenir l'équerre et l'élément de bâti allongé (12) fermement réunis.

6. Jeu de pièces pour le réalisation d'un bâti de support de panneaux tels que panneaux de protecteur de machine, caractérisé en ce qu'il comporte un dispositif selon la revendication 1 avec:

(a) une pluralité d'éléments de bâti oblongs (12) présentant chacun une gorge longitudinale;

(b) une pluralité de barreaux (18), chaque barreau ayant une forme de section droite complémentaire à celle de chaque évidement des éléments de bâti (12) en sorte qu'on peut insérer le barreau dans l'un quelconque des évidements en le faisant tourner autour de son propre axe et en le déplaçant en translation latéralement le barreau présentant aussi deux perçages taraudés qui le traversant transversalement;

(c) une pluralité d'équerres (10A, 10B) traversées chacune par des trous propres à recevoir des boulons (14) de sorte qu'on peut assembler les équerres en positions fixes par rapport aux éléments de bâti en vue de maintenir les éléments de bâti dans un bâti; et

(d) une pluralité de boulons (14) dont chacun est fileté de façon à pénétrer dans un perçage taraudé d'un barreau (18).

7. Jeu de pièces selon la revendication 6 caractérisé en ce qu'il comporte encore au moins un accessoire en L complémentaire de la gorge en D (22, 28) des éléments de bâti allongés (12).

FIG.1  FIG.2  FIG.3

FIG.4  FIG.5  FIG.6

FIG.7  FIG.8

FIG.9

FIG.10

FIG.11a

FIG.11b

FIG.11c

FIG.12